# EUROPEAN PATENT APPLICATION

(11) **EP 4 779 375 A1**
(43) Date of publication of application: **22.07.2026**
(21) Application number: 25219055.8
(22) Date of filing: 27.11.2025
(51) Int. Cl.: G02B 6/38

(54) **OPTICAL FIBER ADAPTER WITH MOVABLE DOOR**

(30) Priority: 21.01.2025 CN 202510096057
(71) Applicant: Acon Optics Communications Inc., New Taipai City (TW)
(72) Inventor: CUI, Yangyang, New Taipei City (TW); CHANG, Yanmei, New Taipei City (TW)
(74) Representative: Becker, Eberhard

(57) **Abstract**

An optical fiber adapter (100) with a movable door (120) including a housing (110, 410) and at least one movable door (120) is provided. The housing (110, 410) has two connecting ports (111, 112) opposite to each other, and the housing (110, 410) has at least a pair of first plug-in slots (113) adjacent to at least one of the two connecting ports (111, 112). The movable door (120) is assembled to at least one of the two connecting ports (111, 112). The movable door (120) includes a frame (121) and at least one panel (122). The panel (122) is pivoted to the frame (121), the frame (121) has a pair of first latches (124) respectively inserted into the first plug-in slots (113) and locked with the housing (110, 410) in a sliding manner.

## Description

### BACKGROUND OF THE INVENTION

### Field of the Invention

The invention relates to an optical fiber adapter, and in particular to an optical fiber adapter with a movable door.

### Description of Related Art

Due to the advantages of high bandwidth and low loss, optical fiber has been widely used as a signal transmission medium in recent years. In order to transmit signals over longer distances, high-power laser diodes were developed, thus significantly increasing the energy coupled into the optical fiber. However, when the high-intensity infrared light beam is emitted from one end of the optical fiber, the human eye may not determine whether the light beam exists or not. If the eyes of the operator are accidentally exposed to the light beam directly, permanent vision damage often occur.

Furthermore, due to the sensitivity of optical fiber communication transmission to dust, when the adapter is vacant or plugged into or unplugged from the corresponding optical fiber connector, if there are no corresponding protective measures, dust enters the inside of the adapter, resulting in increased loss and thus affecting the transmission of optical signals. However, currently, adapters suitable for MPO and MTP optical fiber connectors generally do not have corresponding dust-proof structures, or only cover unused connecting port portions with additional dust caps. For the latter, the user still needs to remove the dust cap before plugging and unplugging the connector, and the removed dust cap is also stored separately, thus readily causing management concerns.

### SUMMARY OF THE INVENTION

The invention provides an optical fiber adapter with a movable door with a movable door structure that may be opened and closed in response to the plugging and unplugging of a connector, thereby improving the convenience of the optical fiber adapter in use and having better manageability.

An optical fiber adapter with a movable door of the invention includes a housing and at least one movable door. The housing has two connecting ports opposite to each other, and the housing has at least a pair of first plug-in slots adjacent to at least one of the two connecting ports. The movable door is assembled to the at least one of the two connecting ports. The movable door includes a frame and at least one panel. The panel is pivoted to the frame, the frame has a pair of first latches respectively inserted into the first plug-in slots and locked with the housing in a sliding manner.

In an embodiment of the invention, the two connecting ports are respectively a first connecting port and a second connecting port, and the first plug-in slots are connected to the first connecting port and located at two opposite sides of the first connecting port.

In an embodiment of the invention, the first latches slide in the first plug-in slots along an axial direction, and the axial direction is orthogonal to a plane in which the connecting ports are located.

In an embodiment of the invention, the first latches slide in the first plug-in slots along an axial direction, and the first plug-in slots and the first latches have a stepped profile along the axial direction so as to be adapted and engaged with each other.

In an embodiment of the invention, the housing further includes a plurality of second latches respectively adjacent to the first plug-in slots and extended from an inner wall of the housing. The movable door also includes a plurality of second plug-in slots adjacent to the first latches, and the second latches are respectively inserted into the second plug-in slots correspondingly.

In an embodiment of the invention, the frame has two side wings opposite to each other and extended toward the housing respectively, the first latches are local structures of the side wings, and the two second plug-in slots are located at two opposite sides of the first latches so that a portion of the first latches is clamped by the two second latches.

In an embodiment of the invention, the second latches are L-shaped cantilever structures with a first arm portion and a second arm portion, the first arm portion is extended from an inner wall of the housing toward an internal space and then turned to be extended toward the movable door to form the second arm portion.

In an embodiment of the invention, the movable door further includes a pair of third latches extended from the frame, and the third latches and the first latches are located at two opposite sides of the frame and extended back-to-back with each other. When the optical fiber connector is inserted into the optical fiber adapter, the third latches are buckled to the optical fiber connector.

In an embodiment of the invention, the first latches and the third latches belong to a same elastic arm structure.

In an embodiment of the invention, the frame has two side wings opposite to each other and extended toward the housing respectively, the first latches are local structures of the side wings, and the first latches are connected between the side wings and the third latches.

In an embodiment of the invention, the frame further includes a plurality of second fixing portions, and the housing further includes a plurality of first fixing portions, so that the frame is fixed to the housing when the first fixing portions and the second fixing portions are snapped together. One of the first fixing portions and the second fixing portions includes a fixing hole, and another of the first fixing portions and the second fixing portions includes a fixing block, so that when the first fixing portions and the second fixing portions are snapped together, the fixing block falls into the fixing hole and interferes with structures of each thereof.

In an embodiment of the invention, the first fixing portions have a first guiding slope and the fixing hole, the second fixing portions have a second guiding slope and the fixing block, and during a process of the movable door being assembled into the housing, the first guiding slope and the second guiding slope slide and dock with each other and separate, and then the fixing block falls into the fixing hole.

In an embodiment of the invention, the optical fiber adapter with the movable door further includes a dust cap removably inserted into the housing to close one of the two connecting ports.

In an embodiment of the invention, the movable door further includes a pivot and a torsion spring, the panel is connected to the frame via the pivot, the torsion spring is sleeved at the pivot and abutted between the panel and the frame, and the torsion spring constantly drives the panel to close to the frame. When the optical fiber connector is inserted into the adapter, the optical fiber connector pushes the panel open and deforms the torsion spring.

In an embodiment of the invention, the housing further has at least one limiting groove to adapt to and limit a rib of at least one optical fiber connector, and an extending direction of the limiting groove is consistent with an insertion and removal direction of the optical fiber connector relative to the housing.

Based on the above, the optical fiber adapter is provided with the first plug-in slots at the at least one connecting port of the housing thereof, and the movable door is assembled at the connecting port, so that the first latches of the movable door may be inserted into the first plug-in slots and locked with the housing in a sliding manner, thereby allowing the optical fiber adapter to have the movable door at the opening. When not in use, the movable door may be allowed to close the connecting port, and when in use, the movable door may be pushed open by the optical fiber connector to enter the internal space of the optical fiber adapter. Accordingly, the movable door provides a movable opening and closing structure so that the connecting port may meet the needs of both when in use and when not in use.

### BRIEF DESCRIPTION OF THE DRAWINGS

FIG. 1 is a schematic diagram of an optical fiber adapter according to an embodiment of the invention.
FIG. 2 is a schematic diagram of an optical fiber connector being docked via an optical fiber adapter.
FIG. 3 is an exploded schematic diagram of an optical fiber adapter.
FIG. 4 shows a member of the optical fiber adapter from another perspective.
FIG. 5 is an exploded schematic diagram of a movable door.
FIG. 6 and FIG. 7 are partial cross-sectional views of a movable door from different perspectives.
FIG. 8 is a partial cross-sectional view of a movable door and a housing after assembly.
FIG. 9 and FIG. 10 are cross-sectional views of an optical fiber adapter at different levels.
FIG. 11 shows a partial enlarged view of a housing.
FIG. 12 is a cross-sectional view of the optical fiber connector of FIG. 2 after being assembled into an optical fiber adapter.
FIG. 13 is a cross-sectional view of another embodiment of the invention after an optical fiber adapter and an optical fiber connector are docked.

### DESCRIPTION OF THE EMBODIMENTS

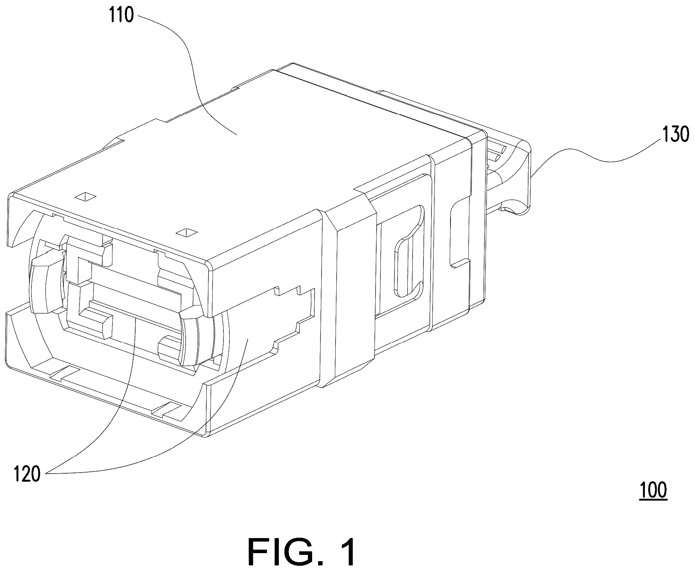

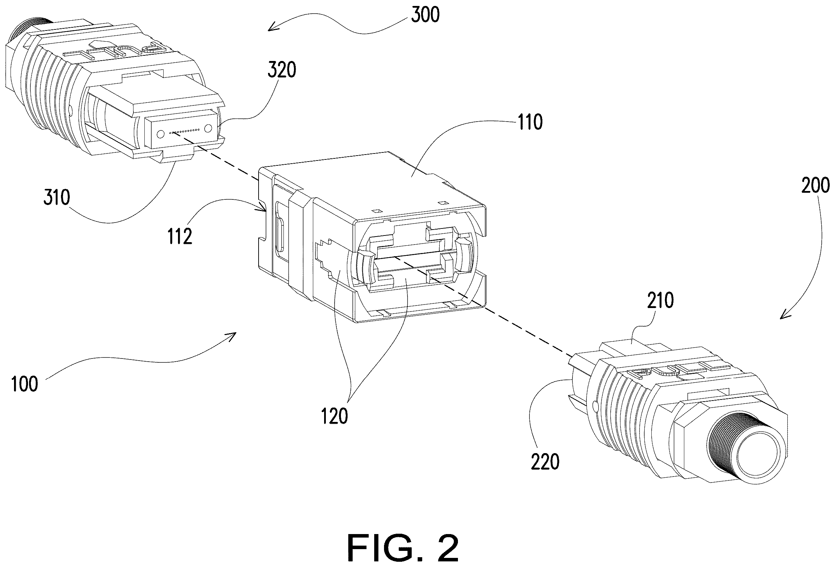

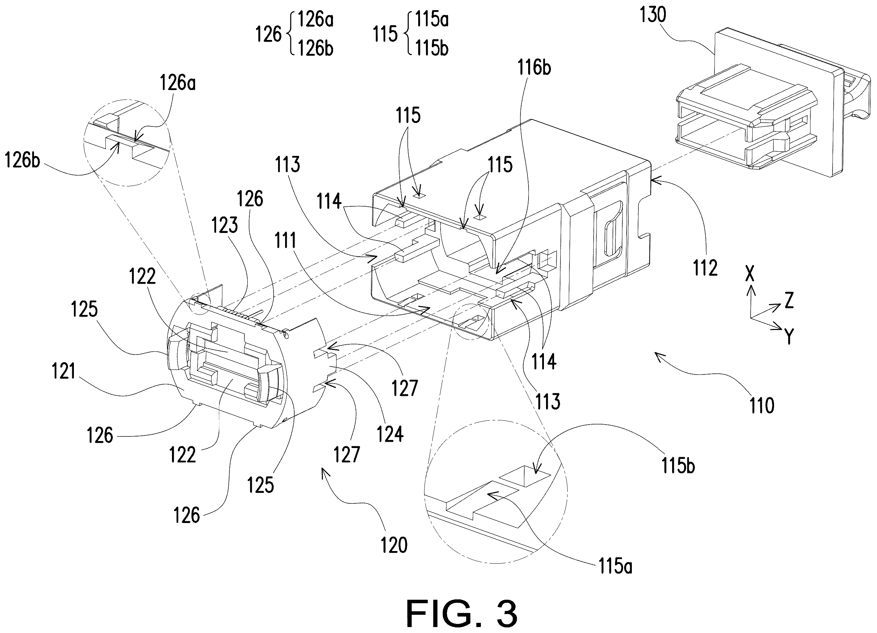

FIG. 1 is a schematic diagram of an optical fiber adapter according to an embodiment of the invention. FIG. 2 is a schematic diagram of an optical fiber connector being docked via an optical fiber adapter. FIG. 3 is an exploded schematic diagram of an optical fiber adapter. Referring to FIG. 1 to FIG. 3 at the same time, in the present embodiment, the optical fiber adapter 100 provides a field for optical fiber connectors 200 and 300 to be docked. The optical fiber adapter 100 includes a housing 110, and the housing 110 has two connecting ports opposite to each other (herein, a first connecting port 111 and a second connecting port 112 are taken as examples). The optical fiber connectors 200 and 300 are respectively inserted into the housing 110 via the first connecting port 111 and the second connecting port 112, and the docking is completed in the internal space of the housing 110.

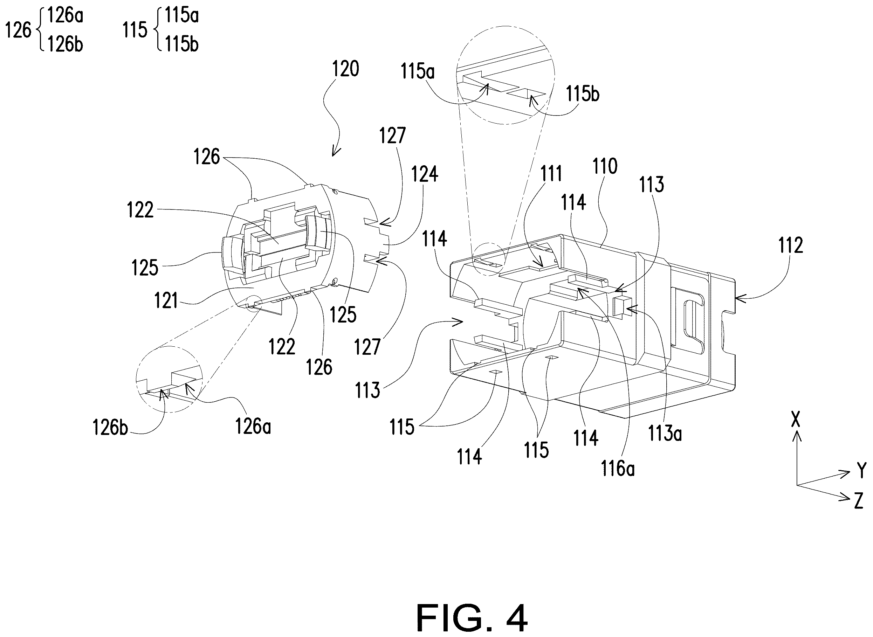

FIG. 4 shows a member of an optical fiber adapter from another perspective, and rectangular coordinates X-Y-Z are provided here to facilitate member description. Referring to FIG. 3 and FIG. 4 at the same time, in response to the use requirements such as dust prevention and operational convenience, the optical fiber adapter 100 of the present embodiment further includes a movable door 120 assembled at the first connecting port 111 of the housing 110. The housing 110 further has first plug-in slots 113 located on two opposite sidewalls of the housing 110. The movable door 120 includes a frame 121 and at least one panel 122. The panel 122 is pivoted to the frame 121. More importantly, the frame 121 has a pair of first latches 124 respectively inserted into the first plug-in slots 113 and locked with the housing 110 in a sliding manner, so that the movable door 120 may be smoothly assembled at the first connecting port 111 of the housing 110.

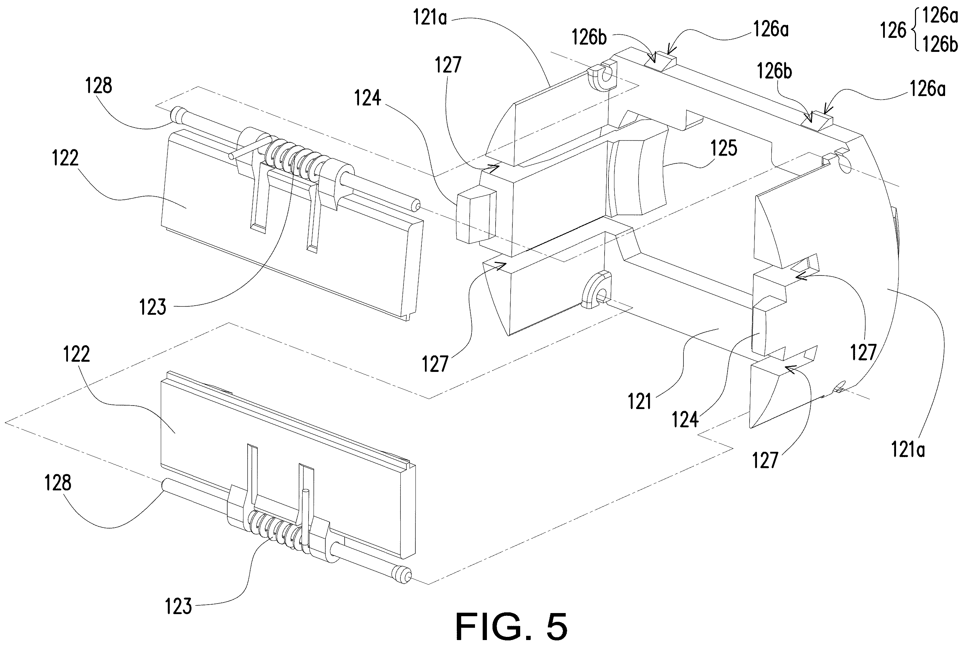

FIG. 5 is an exploded schematic diagram of a movable door. Referring to FIG. 3 to FIG. 5 at the same time, the movable door 120 of the present embodiment further includes a pivot 128 and a torsion spring 123, and the at least one panel 122 substantially includes a pair of panels 122 that may be opened opposite to each other. The frame 121 also has a pair of side wings 121a extended toward the housing 110 (toward the positive Z-axis direction), and the panels 122 are connected to the side wings 121a of the frame 121 via the pivot 128, and the torsion spring 123 is sleeved at the pivot 128 and abutted between the panels 122 and the frame 121 (the main body of the frame 121, that is, the main structure with an opening). The torsion spring 123 constantly drives the panels 122 to close to the frame 121 (that is, closing to the main body of the frame 121 and closing the opening). When the optical fiber connector 200 is inserted into the optical fiber adapter 100, the optical fiber connector 200 pushes the panels 122 open to deform the torsion spring 123 (to open the opening). On the contrary, when the optical fiber connector 200 is pulled out from the optical fiber adapter 100, the elastic force accumulated by the torsion spring 123 due to the deformation drives the panels 122 to return to the state in which the panels 122 are closed on the frame 121, as shown in FIG. 2.

As shown in FIG. 1, the optical fiber adapter 100 of the present embodiment further includes a dust cap 130 detachably inserted into the housing 110 to close the second connecting port 112. Here, the dust cap 130 is only used as a reference for the movable door 120. That is, for the first connecting port 111 requiring plugging and unplugging from time to time, the setting of the movable door 120 may achieve both dust prevention and ease of use. For the second connecting port 112 not requiring frequent plugging and unplugging, for example, if disposed inside the equipment, the dust cap 130 may be used as a protective measure after the manufacture is completed but before use. In another embodiment not shown, the second connecting port 112 may also be provided with the same movable door 120 as the first connecting port 111. In other words, the movable door 120 may effectively overcome the inconvenience of the dust cap 130.

Referring further to FIG. 3 to FIG. 5, in the present embodiment, in order to improve the structural strength of the movable door 120 and the housing 110 after assembly, the housing 110 also has a plurality of first fixing portions 115, and the movable door 120 is also provided with a plurality of second fixing portions 126 at the top and the bottom of the frame 121, so that when the first fixing portions 115 and the second fixing portions 126 are snapped together, the frame 121 may be fixed together with the housing 110. Here, one of the first fixing portions 115 and the second fixing portions 126 includes a fixing hole, and another of the first fixing portions 115 and the second fixing portions 126 includes a fixing block, so that when the first fixing portions 115 and the second fixing portions 126 are snapped together, the fixing block falls into the fixing hole and interferes with the structures of each thereof. Specifically, the first fixing portions 115 have a first guiding slope 115a and a fixing hole 115b, and the two are in a configuration in which the first guiding slope 115a is outside and the fixing hole 115b is inside. The second fixing portions 126 have a second guiding slope 126a and a fixing block 126b, and the two are in a configuration in which the second guiding slope 126a is outside and the fixing block 126b is inside. Accordingly, when the movable door 120 is assembled into the housing 110, the first guiding slope 115a and the second guiding slope 126a first slide and dock with each other and then separate, and then the fixing block 126b successively falls into the fixing hole 115b to achieve the structural interference. In other words, it may be regarded that the first fixing portions 115 and the second fixing portions 126 are on the assembly routes of each thereof, and the first guiding slope 115a and the second guiding slope 126a are located at the first position of the respective assembly strokes thereof, and the fixing hole 115b and the fixing block 126b are located at the last position of the respective assembly strokes thereof.

As shown in FIG. 3 to FIG. 5, for the physical structure of the housing 110, a pair of first plugging slots 113 are connected to the first connecting port 111 and located at two opposite sides of the first connecting port 111. That is, the first plugging slots 113 may be regarded as being located at two opposite sides of the first connecting port 111 along the Y-axis. Furthermore, the first latches 124 slide along the Z-axis in the first plugging slots 113, and the first connecting port 111 may be regarded as being located on the X-Y plane (or regarded as being located on a plane parallel to the X-Y plane), and the first plugging slots 113 and the first latches 124 have stepped profiles along the Z-axis so as to be adapted and engaged with each other. Whether the first latches 124 are buckled to the positioning notch 113a located at the closed end of the first plug-in slots 113, or the first fixing portions 115 and the second fixing portions 126 are snapped together, the above are all used to prevent the movable door 120 from falling off the housing 110.

Moreover, the housing 110 further includes a plurality of second latches 114 respectively adjacent to the first plug-in slots 113 and extended from the inner wall of the housing 110. Correspondingly, the movable door 120 also includes a plurality of second plug-in slots 127 adjacent to the first latches 124, and at the same time that the first latches 124 are inserted into the first plug-in slots 113, the second latches 114 are also correspondingly inserted into the second plug-in slots 127, so that the first latches 124, the first plug-in slots 113, the second latches 114, and the second plug-in slots 127 form a mutual interlocking structure.

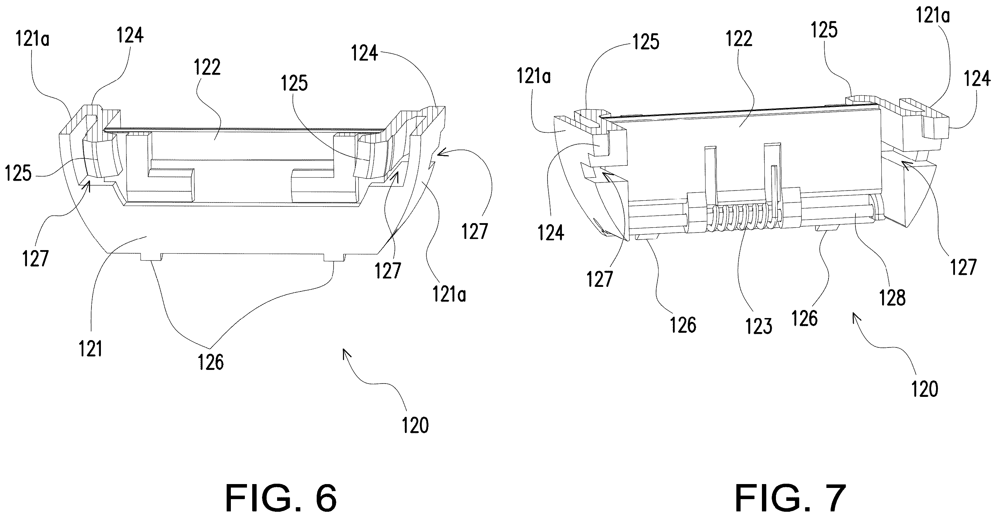

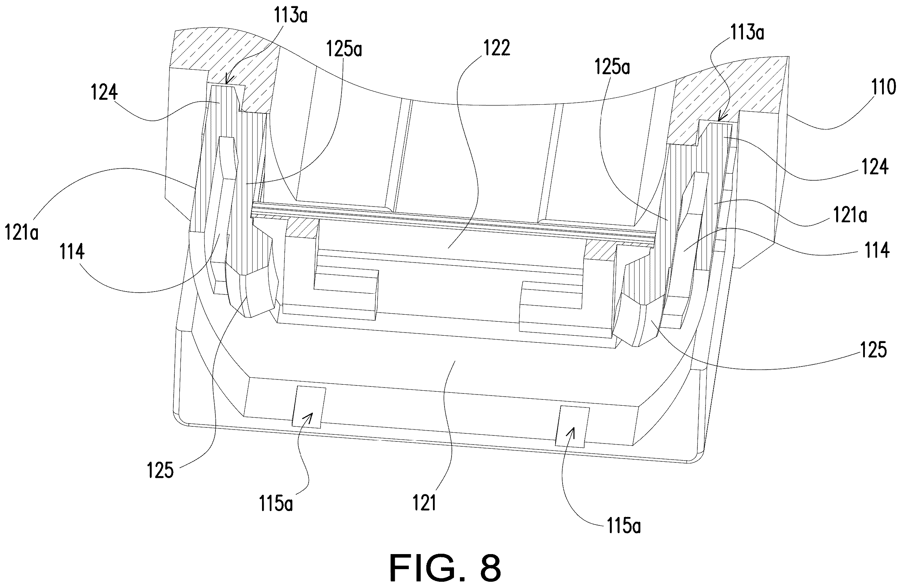

FIG. 6 and FIG. 7 are partial cross-sectional views of a movable door from different perspectives. FIG. 8 is a partial cross-sectional view of a movable door and a housing after assembly. Refer to FIG. 5 to FIG. 7 first to clearly understand the features of the mutual interlocking structures via the comparison between the partial structure and the overall structure of the frame 121. In the present embodiment, for the frame 121, the first latches 124 are local structures of the side wings 121a, and the two second plug-in slots 127 are located at two opposite sides of the first latches 124 along the X-axis. Accordingly, referring to FIG. 8, when the frame 121 is assembled into the housing 110, one of the second latches 114 being inserted into the second plug-in slots 127 is equivalent to supporting a side of the first latches 124. Therefore, when the structural features of the "half" frame 121 shown in FIG. 6 or FIG. 7 are restored to the structural features of the "complete" frame 121 shown in FIG. 5, it is equivalent to that a portion of the first latches 124 is clamped by the two second latches 114 along the X-axis.

It should be mentioned that the movable door 120 also includes a pair of third latches 125 extended from the frame 121, and the third latches 125 and the first latches 124 are located at two opposite sides of the frame 121 along the Z-axis and extended back-to-back to each other. Taking FIG. 4 as an example, the first latches 124 are extended in the positive Z-axis direction, and the third latches 125 are extended in the negative Z-axis direction. When the optical fiber connector 200 is inserted into the optical fiber adapter 100, the optical fiber connector 200 is fixed in the housing 110 by buckling the third latches 125 to the optical fiber connector 200. It may be seen from FIG. 6 to FIG. 8 that the first latches 124 and the third latches 125 belong to a same elastic arm structure 125a, that is, based on the side wings 121a of the frame 121, the first latches 124 are extended to one side, and the third latches 125 are extended to another side via the first latches 124, and the first latches 124 are connected between the side wings 121a and the third latches 125. At the same time, the upper and lower portions of the elastic arm structure 125a along the X-axis are respectively the second plug-in slots 127.

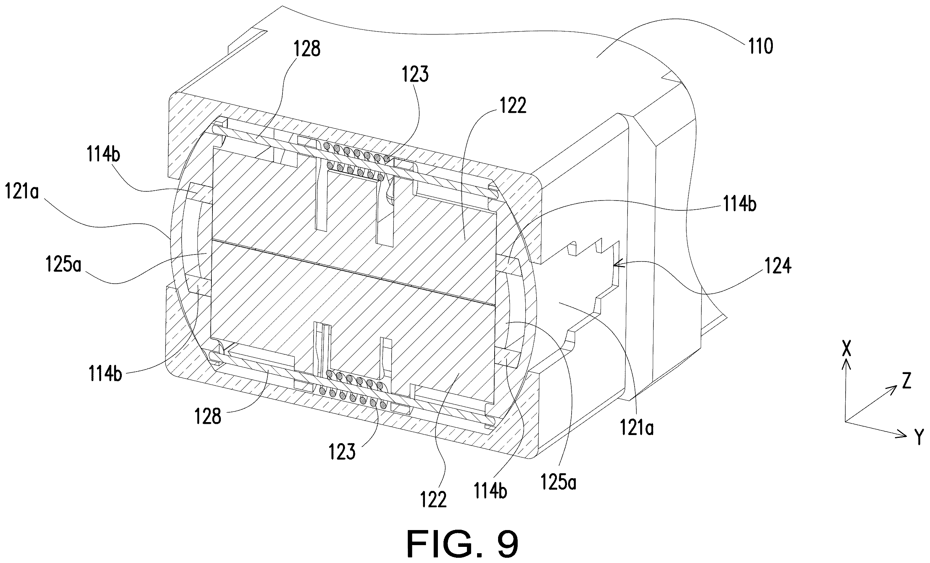

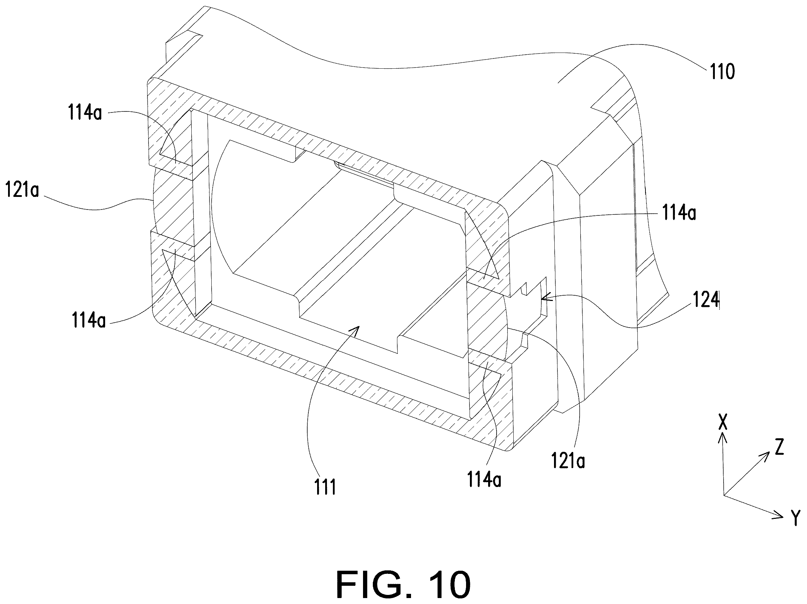

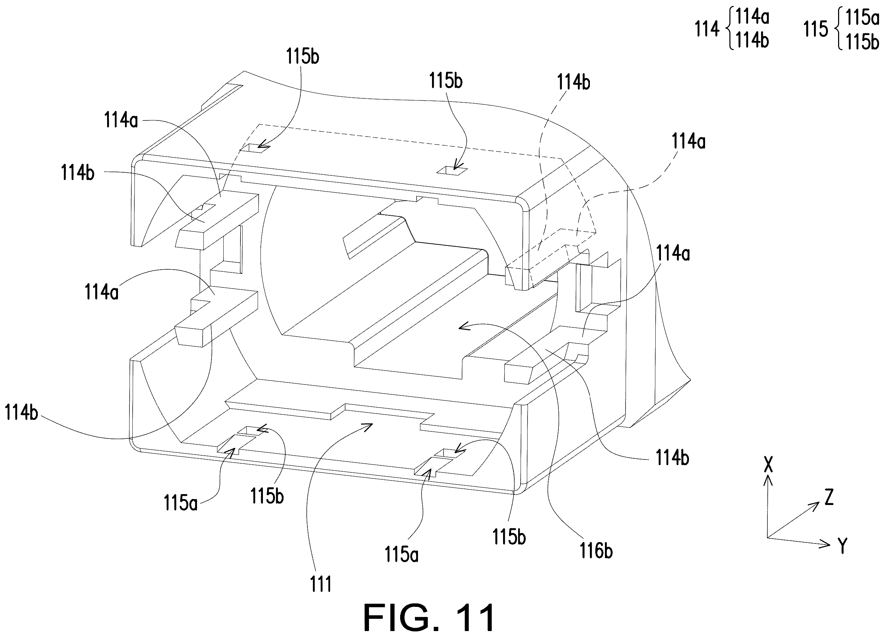

FIG. 9 and FIG. 10 are cross-sectional views of an optical fiber adapter at different levels. FIG. 11 shows a partial enlarged view of a housing. Referring to FIG. 9 to FIG. 11 at the same time, in comparison with the elastic arm structure 125a, it is further explained that the second latches 114 of the present embodiment are L-shaped cantilever structures and have a first arm portion 114a and a second arm portion 114b. The first arm portion 114a is extended from the inner wall of the housing 110 toward the internal space along the Y-axis and then turned (towards the negative Z-axis direction) to be extended toward the movable door 120 to form the second arm portion 114b. Accordingly, the relevant structural relationship may be known from the structural features of different cutting degrees of FIG. 9 and FIG. 10. As shown in FIG. 9, the section position on the Z-axis is closer to the panel 122, and therefore it may be seen that the upper and lower edges of the elastic arm structure 125a are respectively abutted against the second arm portion 114b, and there is a gap between the elastic arm structure 125a and the side wings 121a. As shown in FIG. 10, the section position thereof on the Z-axis is away from the panel 122 and close to the internal space of the housing 110. Therefore, it may be seen that the first latches 124 extended from the side wings 121a are substantially clamped by the first arm portion 114a. Based on the above, the first latches 124, the first plug-in slots 113, the second latches 114, and the second plug-in slots 127 are mutually interlocked so that the frame 121 of the movable door 120 may be firmly assembled in the housing 110.

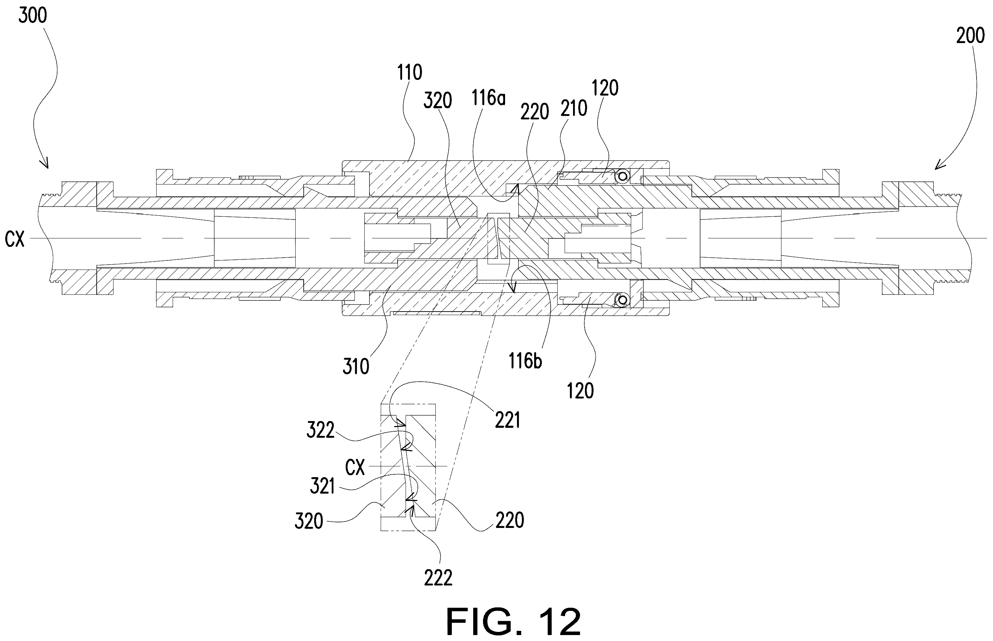

Referring further to FIG. 2, FIG. 4, and FIG. 11, in the present embodiment, the optical fiber connector 200 has a joint 220 and a rib 210 thereon, and the optical fiber connector 300 has a joint 320 and a rib 310 thereunder. Correspondingly, the housing 110 of the optical fiber adapter 100 further has limiting grooves 116a and 116b. FIG. 12 is a cross-sectional view of the optical fiber connector of FIG. 2 after being assembled into an optical fiber adapter. Referring to FIG. 12, the extending direction of the limiting grooves 116a and 116 of the present embodiment is parallel to a central axis CX of the optical fiber adapter 100 (which is also equivalent to being parallel to the Z-axis), so that the limiting groove 116a may be embedded and limited by the rib 210, and the limiting groove 116b may be embedded and limited by the rib 310. Furthermore, the ribs 210 and 310 of the present embodiment are disposed up and down relative to the central axis CX, and thus the limiting grooves 116a and 116b are also disposed up and down as shown above. In addition, as shown in the partial enlarged view of FIG. 12, the side profiles of the optical fiber connectors 200 and 300 of the present embodiment at the joints 220 and 320 thereof are in a state of being opposite and symmetrical to each other. That is, with the central axis CX as a reference, a vertical surface 221 and an inclined slope 222 of the joint 220 are arranged up and down, and a vertical surface 321 and an inclined slope 322 of the joint 320 are arranged down and up, and the central axis CX substantially passes through the inclined slopes 221 and 321.

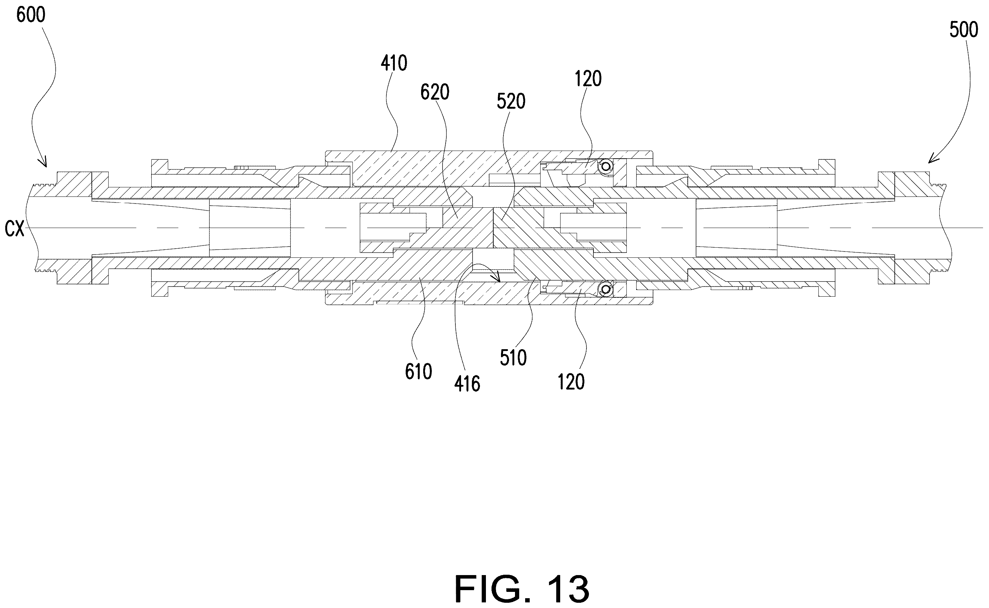

FIG. 13 is a cross-sectional view of another embodiment of the invention after the optical fiber adapter and the optical fiber connector are docked. Referring to FIG. 13, optical fiber connectors 500 and 600 are respectively assembled into a housing 410 of the optical fiber adapter. Different from the previous embodiment, ribs 510 and 610 of the optical fiber connectors 500 and 600 are located at the same side relative to the central axis CX (both are located below the central axis CX), so correspondingly, a limiting groove 416 of the housing 410 is located below the central axis CX and is an integrated structure, that is, the limiting groove 416 is adapted and used for the embedding and limiting of the ribs 510 and 610 at the same time. Furthermore, the side profile of the optical fiber connectors 500 and 600 of the present embodiment at the joint thereof is two planes in contact with each other. Here, the optical fiber connectors 200, 300, 500, 600 of the present embodiment and the above embodiments may all facilitate the user to perform related plugging and unplugging actions via the combination of the ribs 210, 310, 510, 610 and the limiting grooves 116a, 116b, 416.

Based on the above, in the embodiments of the invention, the optical fiber adapter is provided with the first plug-in slots at the at least one connecting port of the housing thereof, and the movable door is assembled at the connecting port so that the first latches of the movable door may be inserted into the first plug-in slots and locked with the housing in a sliding manner. At the same time, the second latches of the housing are also inserted into the second plug-in slots of the frame during the insertion process, and the first latches, the first plug-in slots, the second latches, and the second plug-in slots complete the combination between the side wings of the frame and the sidewall of the housing via a mutual interlocking relationship. In addition, the main body of the frame and the corresponding top plate and bottom plate of the housing may also be combined via the first fixing portions and the second fixing portions, thereby improving the combination strength between the movable door and the housing.

In this way, the optical fiber adapter may be provided with the movable door at the connecting port, so that the movable door may close the connecting port when the connecting port is not in use, and the movable door may be pushed open by the optical fiber connector to enter the internal space of the optical fiber adapter when the connecting port is in use. Accordingly, the movable door provides a simple and convenient connecting port opening and closing structure, so that the connecting port may meet the needs of both when in use and when not in use. In short, the connecting port of the optical fiber adapter may be provided with the movable door according to the use requirements, so as to simultaneously meet requirements such as shielding, dust prevention, and improving the convenience of use.

## Claims

1. An optical fiber adapter (100) with a movable door (120), comprising:
a housing (110, 410) with two connecting ports (111, 112) opposite to each other, and the housing (110, 410) has at least a pair of first plug-in slots (113) adjacent to at least one of the two connecting ports (111, 112); and
at least one movable door (120) assembled to the at least one of the two connecting ports (111, 112), the movable door (120) comprises a frame (121) and at least one panel (122), the panel (122) is pivoted to the frame (121), and the frame (121) has a pair of first latches (124) inserted into the pair of first plug-in slots (113) and locked with the housing (110, 410) in a sliding manner.

2. The optical fiber adapter (100) with the movable door (120) of claim 1, wherein the two connecting ports (111, 112) are respectively a first connecting port (111) and a second connecting port (112), and the pair of first plug-in slots (113) are connected to the first connecting port (111) and located at two opposite sides of the first connecting port (111).

3. The optical fiber adapter (100) with the movable door (120) of claim 1, wherein the first latches (124) slide in the first plug-in slots (113) along an axial direction, and the axial direction is orthogonal to a plane in which the connecting ports (111, 112) are located.

4. The optical fiber adapter (100) with the movable door (120) of claim 1, wherein the first latches (124) slide in the first plug-in slots (113) along an axial direction, and the first plug-in slots (113) and the first latches (124) have a stepped profile along the axial direction so as to be adapted and engaged with each other.

5. The optical fiber adapter (100) with the movable door (120) of claim 1, wherein the housing (110, 410) further comprises a plurality of second latches (114) respectively adjacent to the pair of first plug-in slots (113) and extended from an inner wall of the housing (110, 410), the movable door (120) further comprises a plurality of second plug-in slots (127) adjacent to the first latches (124), and the second latches (114) are respectively and correspondingly inserted into the second plug-in slots (127).

6. The optical fiber adapter (100) with the movable door (120) of claim 5, wherein the frame (121) has two side wings (121a) opposite to each other and extended toward the housing (110, 410) respectively, the first latches (124) are local structures of the side wings (121a), and the two second plug-in slots (127) are located at two opposite sides of the first latches (124) so that a portion of the first latches (124) is clamped by the two second latches (114).

7. The optical fiber adapter (100) with the movable door (120) of claim 5, wherein the second latches (114) are L-shaped cantilever structures with a first arm portion (114a) and a second arm portion (114b), the first arm portion (114a) is extended from the inner wall of the housing (110, 410) toward an internal space and then turned to be extended toward the movable door (120) to form the second arm portion (114b).

8. The optical fiber adapter (100) with the movable door (120) of claim 1, wherein the movable door (120) further comprises a pair of third latches (125) extended from the frame (121), and the third latches (125) and the first latches (124) are located at two opposite sides of the frame (121) and extended back-to-back with each other, and when an optical fiber connector (200, 300, 500, 600) is inserted into the optical fiber adapter (100), the third latches (125) are buckled to the optical fiber connector (200, 300, 500, 600).

9. The optical fiber adapter (100) with the movable door (120) of claim 8, wherein the first latches (124) and the third latches (125) belong to a same elastic arm structure (125a).

10. The optical fiber adapter (100) with the movable door (120) of claim 8, wherein the frame (121) has two side wings (121a) opposite to each other and extended toward the housing (110, 410) respectively, the first latches (124) are local structures of the side wings (121a), and the first latches (124) are connected between the side wings (121a) and the third latches (125).

11. The optical fiber adapter (100) with the movable door (120) of claim 1, wherein the frame (121) also has a plurality of second fixing portions (126), and the housing (110, 410) also has a plurality of first fixing portions (115), so that when the first fixing portions (115) and the second fixing portions (126) are snapped together, the frame (121) is fixed to the housing (110, 410), one of the first fixing portions (115) and the second fixing portions (126) comprises a fixing hole (115b), and another of the first fixing portions (115) and the second fixing portions (126) comprises a fixing block (126b), so that when the first fixing portions (115) and the second fixing portions (126) are snapped together, the fixing block (126b) falls into the fixing hole (115b) and interferes with structures of each thereof.

12. The optical fiber adapter (100) with the movable door (120) of claim 11, wherein the first fixing portions (115) have a first guiding slope (115a) and the fixing hole (115b), the second fixing portions (126) have a second guiding slope (126a) and the fixing block (126b), and during a process of the movable door (120) being assembled into the housing (110, 410), the first guiding slope (115a) and the second guiding slope (126a) slide and dock with each other and separate, and then the fixing block (126b) falls into the fixing hole (115b).

13. The optical fiber adapter (100) with the movable door (120) of claim 1, further comprising a dust cap (130) removably inserted into the housing (110, 410) to close one of the two connecting ports (111, 112).

14. The optical fiber adapter (100) with the movable door (120) of claim 1, wherein the movable door (120) further comprises a pivot (128) and a torsion spring (123), the panel (122) is connected to the frame (121) via the pivot (128), the torsion spring (123) is sleeved at the pivot (128) and abutted between the panel (122) and the frame (121), the torsion spring (123) constantly drives the panel (122) to close to the frame (121), and when the optical fiber connector (200, 300, 500, 600) is inserted into the adapter (100), the optical fiber connector (200, 300, 500, 600) pushes the panel (122) open to deform the torsion spring (123).

15. The optical fiber adapter (100) with the movable door (120) of claim 1, wherein the housing (110, 410) further has at least one limiting groove (116a, 116b, 416) to adapt to and limit a rib (210, 310, 510, 610) of at least one optical fiber connector (200, 300, 500, 600), and an extending direction of the limiting groove (116a, 116b, 416) is consistent with an insertion and removal direction of the optical fiber connector (200, 300, 500, 600) relative to the housing (110, 410).
